# EUROPEAN PATENT SPECIFICATION

(11) **EP 3 659 936 B1**
(45) Date of publication and mention of the grant of the patent: **07.06.2023**
(21) Application number: 18839414.2
(22) Date of filing: 27.07.2018
(51) Int. Cl.: B65D 8/00, B65D 1/34, B29C 51/02, B29C 51/04, B29C 51/10, B29C 51/14, B29C 51/16, B29C 43/20, B31B 50/44, B29K 311/12, B29L 9/00, B29L 31/00, B32B 37/12

(54) **ASSEMBLY OF FLAT SHEETS, METHOD FOR PRODUCING THE ASSEMBLY, METHOD FOR MANUFACTURING A PACKAGING, AND METHOD FOR PACKAGING AN OBJECT**
KOMPLEX AUS FLACHEN ZUSCHNITTEN, VERFAHREN ZUR HERSTELLUNG DIESES KOMPLEXES, VERFAHREN ZUR HERSTELLUNG EINER VERPACKUNG UND VERFAHREN ZUR VERPACKUNG EINES ARTIKELS
COMPLEXE DE FEUILLES PLANES, PROCÉDÉ D'OBTENTION DUDIT COMPLEXE, PROCÉDÉ DE FABRICATION D'UN EMBALLAGE ET PROCÉDÉ D'EMBALLAGE D'UN OBJET

(30) Priority: 28.07.2017 ES 201730989
(43) Date of publication of application: 03.06.2020
(73) Proprietor: AINIA, 46980 Paterna Valencia (ES)
(72) Inventor: ENGUIX NICOLÁS, Carlos, E-46980 Paterna Valencia (ES); ZOMEÑO ALCALÁ,Pedro, E-46980 Paterna Valencia (ES); ALBORCH PUCHOL, Miguel Rafael, E-46980 Paterna Valencia (ES); GARCÍA REVERTER, José, E-46980 Paterna Valencia (ES); BLASCO PIQUER, Miguel, E-46980 Paterna Valencia (ES); SUBIRATS HUERTA, Sebastián, E-46980 Paterna Valencia (ES)
(74) Representative: ABG Intellectual Property Law, S.L.
(86) International application number: PCT/ES2018/070536
(87) International publication number: WO 2019/020863

(56) References cited:
- EP-A1- 0 052 021
- EP-A1- 2 586 606
- WO-A2-99/67143
- JP-A- 2001 096 644
- JP-A- 2001 287 729
- US-A- 3 547 722

## Description

### Object of the Invention

The present invention relates to a complex made up of consecutively stacked flat sheets, the invention particularly relates to a complex for forming packages containing items. The invention also relates to a method for obtaining said complex. The items contained in the package are preferably food products.

The complex is formed particularly from stacked flat sheets comprising folding flaps and allowing the formation of the package in a single run during the manufacturing stage. The present invention furthermore provides a method for packaging items in said packages.

### Background of the Invention

Packages are receptacles or containers capable of holding items for the preservation or transport thereof. Among other functions, packages allow containing, protecting, handling, distributing, and serving as presentation for said items. Depending on the size and shape of the items, the packages can be adjusted to said shape for holding the items in a tight manner, or they can be manufactured to be ample so as to contain various types of items.

On the other hand, just as there is a wide range of uses and sizes, there is also a range of materials suitable for use, depending both on the characteristics of the item to be contained and on the conditions to which it may be exposed during its service life. Based on the foregoing, the materials used for the package can be metallic, textile, glass, plastic and derivative materials, or they can be of a cellulosic origin. As a result each of the materials used entails different advantages and drawbacks.

Particularly considering packages of a cellulosic origin, they form a group including the following
▪ paper: the raw material from which it is obtained is wood, and even though it is possible to use natural materials of another type such as esparto, jute, straw, etc., their use in the paper industry is not as important. The main components of the fibers forming wood are cellulose, hemicelluloses and lignins, among which cellulose is the most important and is what confers to paper its characteristic features.
▪ pressboard: fibrous material similar to paper but with several layers firmly attached to one another. Out of the different layers, the upper layer which is usually coated (improving the gloss, smoothness, and printing properties), where the rest of the inner layers of the chipboard are usually made of a recycled material or a virgin material.
▪ corrugated cardboard: corrugated cardboard is the result of the binding of several sheets of paper kept equidistant from one another by means of inserting one or several corrugations.

Although many of the inherent advantages associated with the use of packages of a cellulosic origin are known, such as being easy to print, providing greater recycling ease, and coming from natural sources, there are drawbacks when it comes to manufacturing and producing packages suitable for subsequently being made hermetic, given their porous nature as well as the limited ability of these materials to be stretched and welded.

In relation to packages of a cellulosic origin, there are solutions available today but they have a number of associated problems. Patent document ES2144736 discloses a process of obtaining paper with higher elasticity that allows certain thermoforming, although the range of elasticity that is increased is limited. This paper can be laminated with a plastic film as shown in patent EP2586606, but as mentioned, this type of material does not have any significant elasticity and packages with any substantial depth cannot be obtained.

Patent document EP2388201 relates to producing a tray using corrugated cardboard (micro-channel) by means of thermoforming. The problem with this technology is that by producing a tray-type package, wrinkles or creases are created in the corners and on the rim of the tray, so a completely leak-tight seal is not obtained.

Patent document WO9967143 relates to producing a tray-type package with cellulosic material by means of attaching two parts together. In terms of manufacturing, this solution does not allow a suitable utilization of material, since the starting sheets used to produce each of the parts require being die cut, having both outer and inner flaps or projections with respect to the rim thereof once the package has been formed. Additionally, this makes it impossible to form said packages in a single step, since it is necessary to fold the flaps or to thermoform the sheets in two ways (upwards and downwards), which involves a delay and therefore excess cost on the production line.

Patent document EP2441697 discloses a tray-type package which is produced in two manufacturing steps: one step for forming the package and another step where the plastic film which will allow heat-sealing the package is thermoformed on the package. The problem with this type of design is that it is also performed in two manufacturing steps. This package furthermore needs a coating film for its final assembly because it is actually the film that carries out the function of attaching the flaps of the cellulosic sheet. Another problem associated with this solution is that the surface on which heat-sealing is performed is not continuous, where tightness problems known as "chimneys," i.e., a direct path between the inside and the outside of the package, may be generated, causing a micro-tunnel between the outer and inner atmospheres of the package.

In the prior art, a complex, a method for obtaining a complex, a method for manufacturing a package, and a method for packaging at least one item are disclosed in EP 0 052 021 A1.

### Description of the Invention

The present invention proposes a solution to the aforementioned problems by means of a complex made up of consecutively stacked flat sheets according to claim 1, a method for obtaining a complex according to claim 15, a method for manufacturing a package according to claim 17, as well as a method for packaging at least one item according to claim 18. The dependent claims define preferred embodiments of the invention.

A first inventive aspect provides a complex made up of consecutively stacked flat sheets, the complex being according to claim 1.

Throughout this document, "sheet" will be understood as any substantially flat element, or one in the form of a board or plate, where one of its dimensions, such as its thickness, is much smaller than either of its other two dimensions, i.e., the width and the length.

Furthermore, "die cut" sheet is understood to mean a sheet having cuts, notches, or holes forming predefined drawings. Said drawings are usually produced by the stamping of a press or punch that reproduces the predefined drawing, stamping it onto a die supporting said sheet.

Advantageously, the arrangement of the respectives die cuts in each of the sheets allows for the folding of the flaps of each of the sheets to be folded or collapsed (both terms being understood as being equivalent), as the case may be, by means of a single folding or collapsing movement.

Furthermore, this allows the rim of the finally formed package to be formed by superimposing the rims of all the sheets, the rim therefore being continuous, smooth, and planar, and being perfectly defined along the contour of the package. The rim therefore acts like a reliable point of attachment for incorporating internal coverings (such as liners) or external coverings (such as lid films), such that delamination or a welding defect do not occur, or so that the known defect of creating "chimneys" in the heat-sealing of a package with the external covering or lidding film does not occur.

Furthermore, the sheets are advantageously flat before being folded, which allows a higher-quality printout of drawings since the printing occurs on a flat surface. In the event that the sheets comprise collapsible or foldable flaps, they will not subsequently be stretched or creased, as would occur in the thermoforming process. Rather in this process, the printed drawing will be maintained in its entirety on said sheets.

On the other hand, throughout this document said inner contour comprising a first portion corresponding with a second portion of the outer contour will be understood to mean that both portions are the closest segments of both contours, where there can be as many as there are first main flaps comprised in the first sheet. That being said, when it is said that the first main flap extends along the first portion of the inner contour in the direction opposite the second portion of the outer contour, it is understood that the main flap extends towards the central part of the sheet from the inner contour of the first rim.

Furthermore, the fact that the perimeter of the at least one additional flat sheet is demarcated by the first rim of the first flat sheet will be understood to mean that if both sheets were stacked making their contours match up, the outer contour or perimeter of the additional flat sheet would be kept within the confines of the inner and outer contours of the first flat sheet. Therefore, the outer contour or perimeter of the additional flat sheet can be equal to the inner contour, or equal to the outer contour of the first rim, or be placed between both. Likewise, said perimeter can vary the proximity to either contour of the first rim along same.

Advantageously, this allows there to be a continuous attachment area between both sheets, allowing the absence of discontinuities or joints in the rim of the package so a more durable attachment between said sheets would be generated. If said perimeter of the additional flat sheet is equal to the outer contour of the first rim, this allows a more reliable and durable attachment between both sheets.

Since the flaps are arranged internally with respect to the rim, trimming wastage will be lessened when the sheets are obtained from a general sheet or reel. That is because many identical sheets very closely attached to one another may be generated from one and the same general sheet or reel, without leaving any spaces that are not used in generating sheets. In particular, a larger number of sheets can be generated with less material wastage.

According to the invention, the assembly comprises at least a second die cut flat sheet configured for being folded, comprising a second rim the outer contour of which demarcates its perimeter, wherein said at least a second sheet further comprises:
▪ at least a second main flap configured for forming a base of the package.

The complex is understood to be formed by at least a first die cut flat sheet and the assembly, wherein the assembly is made up of at least a second die cut flat sheet.

As can be seen, the flaps of the die cut flat sheets are folded or collapsed, and not thermoformed. The material of the sheets would therefore not be subjected to stretching, which advantageously means that materials with little stretchability can be used to form the package.

In one embodiment, the at least a first die cut flat sheet further comprises at least a first auxiliary flap connected to the first main flap and configured for being part of the base of the package.

In one embodiment, the at least a second die cut flat sheet further comprises at least a second auxiliary flap located between the second main flap and the second rim. Said at least auxiliary flap is preferably configured for being supported on the at least a first main flap.

In one embodiment, at least a second auxiliary flap of the at least a second sheet comprises a frangible attachment with the inner contour of the second rim.

Advantageously, this allows the package that is finally formed to be substantially a rectangular prism, since the side faces are substantially perpendicular to the base of the package. This additionally allows for greater utilization of the inner space of the package.

That is because if the at least a second auxiliary flap is attached to the second main flap and to the second rim, it must have a length corresponding to the length of the at least a first main flap when it is folded, thereby causing the inner contour of the base to be substantially smaller than the inner contour of the rim of the package, the side walls of the package therefore being inclined. This feature that the side walls of the package are inclined allows the packages to be stackable, and it also makes it easier to take them out of the mold after being formed.

In one embodiment, the assembly comprises at least one flat sheet made of thermoplastic material configured for forming the liner of the package. The flat sheet made of thermoplastic material will act like an internal covering of the package once it has been formed, therefore the terms liner or internal waterproofing covering will be considered equivalent throughout this document.

In this embodiment, the complex is understood to be formed by a first die cut flat sheet and the assembly, wherein the assembly is formed by at least one flat sheet made of thermoplastic material.

The use of an internal covering or liner allows closure by heat-sealing with a lid and/or sealing the inside of the package or making it leak-tight, thereby covering the possible spaces between the main flaps which the auxiliary flaps do not overlap. This would prevent the leakage of liquids or gases contained therein through the walls of the package. Additionally, in the event that the sheets are manufactured from a hygroscopic material, this allows said sheets to not deteriorate due to the leakage of liquids coming from the item contained in the formed package.

In one embodiment, the assembly comprises at least a third die cut flat sheet configured for being folded, comprising a third rim with corners on its inner contour, the inner contour preferably comprising chamfered corners, wherein the outer contour thereof demarcates its perimeter,
▪ wherein said at least a third sheet further comprises at least a third main flap substantially diagonal to one of the corners of the inner contour and connected with the third rim by a first end, said main flap being configured for forming at least one chamfered corner of the package.

This will be understood as being equivalent to the assembly comprising at least a third die cut flat sheet configured for being folded, comprising a continuous third rim demarcated by an outer contour and an inner contour, wherein said inner contour comprises a first portion, or first end, and the outer contour comprises a second portion, said first and second portion of the third rim corresponding with one another;
▪ wherein said at least a third sheet further comprises at least a third main flap extending along the first portion of the inner contour in the direction opposite the second portion of the outer contour, the third main flap being configured for forming a wall of the package.

In one embodiment, at least a third main flap further comprises at least a third auxiliary flap located at a second end of the at least a third main flap, the third auxiliary flap being configured for being supported on the at least a first main flap and/or on the at least second main flap.

The sheets of the complex are thereby configured so that the main flaps subsequently form the structural surfaces of the package once it is formed; in particular, the first main flaps would form the side faces of the package, the second main flap(s) would form the base of the package, and the third main flaps would form the corners of the package, wherein said corners may or may not be chamfered.

On the other hand, the sheets of the complex are configured so that the auxiliary flaps can serve as an attachment with the adjacent main and/or auxiliary flaps of other sheets, regardless of the sheet that is immediately before or after in the subsequent orderly stacking sequence for forming the package.

Additionally, as the superimposition of different sheets of the complex in which each one forms a main face of the package, e.g. the base, the side faces, or the chamfered corners, occurs, it allows for the depth of the package once it is formed, with said depth being measured perpendicular to the plane forming the base of the package, to be substantially greater than those depths achieved by conventional manufacturing methods.

In one embodiment, the assembly further comprises a flat sheet configured for forming a lid such that an item contained in the package is covered. This flat sheet will be understood to be an external covering or a "lidding film." Said flat sheet is preferably made of thermoplastic material.

This external covering or lid is preferably configured for being removed from the package once it has been formed, and thereby allowing the user to access the inside of said package. Furthermore, since the package incorporates said lidding film in its formation, it allows making the inside of the package leak-tight. Advantageously, since the attachment between the film and the package is only along the rim of said package, it allows utilizing all the inner space of the package.

In one embodiment, the complex further comprises attachment means located on the at least a first flat sheet and/or at least one flat sheet of the assembly.

With respect to the complex furthermore comprising attachment means on at least one part of the surfaces that will be in contact after forming the package, particularly between the first sheet and an additional flat sheet of the assembly, at least one of the main and/or auxiliary flaps of the at least a first sheet, the at least a second sheet, and/or the at least a third sheet are understood to comprise said attachment means on the face that will face the corresponding main flap. Furthermore, said attachment means are put on the faces of the perimetral rims in contact with one another.

In one embodiment, the attachment means are hot glue, preferably a thermoplastic adhesive.

Advantageously, both during the forming step and in a step prior to said forming step, this hot glue is heated up, allowing it to be uniformly distributed on the auxiliary flaps. With a local application in the center of said flaps, the glue is thereby distributed in the forming step over an area where it may even become similar to the surface of the auxiliary flap.

In one embodiment, the attachment means located on the first flat sheet or the at least one flat lidding sheet are a strong adhesive, the adhesive being placed only on the first rim of the first sheet or adjacent to the perimeter of the flat lidding sheet, respectively.

The bonding strength between the liner and the material of the first sheet is suitably greater than the separation strength between the liner and the lidding film heat-sealed thereon.

In one embodiment, at least one of the at least a first die cut flat sheet, the at least a second die cut flat sheet, and/or the at least a third die cut flat sheet are manufactured from a cellulosic material, such as paper, pressboard, and corrugated cardboard.

Cellulosic materials advantageously allow being readily recyclable, being able to have different shapes and dimensions, in addition to having a raw material obtained from renewable sources.

In other words, there is provided a complex made up of consecutively stacked flat sheets configured for forming a package for containing items, wherein said package comprises a rim with a flat and continuous polygonal contour, at least one base, and an assembly of side faces corresponding to the sides of the contour.

In a second inventive aspect, the invention provides a method for obtaining a complex made up of consecutively stacked flat sheets, said method being according to claim 15.

In one embodiment, the method according to the second inventive aspect is according to claim 16.

If the complex can be obtained from a general starting sheet or reel, in this case there will be a general sheet or reel for producing at least a first flat sheet, and at least another general sheet or reel for producing at least one additional flat sheet of the assembly, wherein the method of the second inventive aspect is according to claim 16.

In this embodiment of obtaining the complex from a general starting sheet or reel, said starting sheets are understood to be configured so as to enable extracting each of the at least a first sheet and the at least one additional flat sheet. The general starting sheets or reels can thereby be arranged taking into consideration the stacking sequence so as to enable being extracted in one and the same step, all at the same time, maintaining the order between them.

In a third inventive aspect, the invention provides a method for manufacturing a package for containing items, preferably for containing food products, said method being according to claim 17.

If the complex is obtained from a series of general starting sheets or reels, the method will comprise after step e), die cutting all the stacked general starting sheets forming the package in order to extract it in a single step. In this case, the mold performs its holding-down action outside of the first rim.

Throughout this document, "mold" will be understood to be the element in which the sheets are horizontally positioned and which allows holding them down and/or keeping them immobile along the rim, as a result of retainers. Furthermore, said mold comprises a central cavity reproducing the final shape of the package for the forming thereof. In one embodiment, the central cavity of said mold is adaptable for reproducing different final shapes of the package and it can be used with different types of sheets. Said central cavity of the mold preferably comprises holes that are distributed so as to allow the exit of air accompanying the introduction of the piston.

On the other hand, "piston" will be understood to be an element reproducing the complementary shape of the mold and being configured for being vertically introduced therein, the passage thereof causing the folding of the flaps of all the sheets stacked in the mold. In one embodiment, the piston incorporates heating means, e.g. resistors, to cause the attachment means to melt in the event that they are adhesives, being distributed over the entire surface of the auxiliary flaps. Furthermore, these heating means incorporated in the piston allow performing the thermoforming of the internal covering or liner.

In one embodiment, the piston is formed by means for applying pressure on the outer face of the third sheet, such as injectors for applying pressurized air on said face, as well as holes distributed in the central cavity of the mold that allow the air to exit the inside of said central cavity. Additionally, said holes are provided with suction means on the outer face of the first sheet for extracting the air from the inside of said cavity. In this embodiment, introducing the piston acting on the center of the complex causing the folding of all the main and auxiliary flaps with its movement will be understood to be equivalent to the joint operation of applying compressed air on one face and letting the air exit, or suctioning it out, on the opposite face of the package, with the predefined height of the depth of said package being reproduced by the mold in this case. Furthermore, this embodiment would comprise heating means, e.g. resistors, for causing the hot glue to melt and be distributed over the surface of the auxiliary flaps, in addition to being configured for causing the thermoforming of the internal covering or liner, where appropriate.

In one embodiment, the method of the third inventive aspect further comprises after step a) a step of heating the complex provided in said step a). Current industrial equipment not incorporating heating means in the piston may thereby be used.

Advantageously, this second inventive aspect allows the forming of the package to take place in a single step, which is in accordance with the vertical movement of the piston. As a result, folding some of the flaps up and others down is not necessary, as the case may be, prior to the superimposition and attachment of the sheets.

In one embodiment, the at least a first sheet is attached in an articulable manner by its outer contour to the perimeter of at least one additional flat sheet of the assembly. In other words, both the at least a first sheet and the at least one additional sheet of the assembly are made in a continuous sheet, being consecutively attached at the contour thereof by articulated attachments. This allows them to be bent at their attachments (diptych type, triptych type, etc) to form the complex made up of consecutively stacked sheets that will generate the package.

In one embodiment, the manufactured package may comprise the internal covering or liner on the outer surface. Additionally, the package may comprise an internal covering on the inner face of the package and another covering or liner on its outer surface, thereby producing a sandwich-type structure with the other intermediate die cut flat sheets. Preferably, in this embodiment with the liner located on the outer surface, said flat sheet made of thermoplastic material will be thicker.

In a fourth inventive aspect, the invention provides a method for packaging at least one item, preferably food products, said method being according to claim 18.

In one embodiment, the attachment of at least one additional flat sheet of the assembly with the lid along the first rim of the first flat sheet occurs by means of heat-sealing. Said lid is preferably made of thermoplastic material.

Heat-sealing is understood to produce a heat-sealed attachment along the rim. The first sheet may comprise a film or covering that allows being heat-sealed in the event that the materials subjected to said heat-sealing are not thermoplastic materials.

In one embodiment, the attachment of at least one additional flat sheet of the assembly with the lid along the first rim of the first flat sheet occurs by means of sealing with an adhesive.

This advantageously allows the inside of the package to be completely hermetic as a synergistic combination between the overlap of the flaps of the sheets of the package together with the lidding film heat-sealed to the rim thereof.

The attachment along just the rim of the package would advantageously be designed to withstand the conditions to which the package may be exposed during its service life until the user wanted to access the inside of the package in order to handle the item contained therein. Furthermore, this technique is cost-effective and easy to implement in the production line.

In one embodiment, in the method according to the fourth inventive aspect a determined atmosphere or a vacuum is applied after step ii), which achieves packaging in a modified atmosphere, or a vacuum inside the package, and prevents the leakage or loss thereof by means of making it leak-tight after step iv).

Throughout this document, "packaged in a modified atmosphere" will be understood as the introduction of a gas or a series of suitable and predefined gases, mainly a mixture of pure oxygen, carbon dioxide, and nitrogen in a high-barrier or permeable package, wherein the mixture of gases complies with the specific needs of each packaged item.

Advantageously, packaging in a protective atmosphere allows the packaged items, e.g. fresh food products with minimal preprocessing, to maintain their original appearance, flavor, and texture. Furthermore, this packaging allows for a longer preservation of the packaged items without needing to add chemical preservatives or stabilizers.

On the other hand, it will be understood that the vacuum packaging achieved in the fourth inventive aspect can also be a skin, a vacuum that subsequently requires heating the lidding film in order to adopt the shape of the item contained therein and to be close to same being understood as such.

All the features and/or steps of the methods described in this specification (including the claims, description, and drawings) can be combined in any combination, with the exception of those combinations of such mutually exclusive features.

### Description of the Drawings

These and other features and advantages of the invention will be better understood based on the following detailed description of a preferred embodiment given solely by way of an illustrative and non-limiting example in reference to the attached drawings.
Figure 1a schematically illustrates a complex made up of flat sheets formed by stacking a first die cut flat sheet and an additional flat sheet, the latter being a second die cut flat sheet in this case.
Figure 1b schematically illustrates a complex formed by stacking a first die cut flat sheet and an additional flat sheet, the latter being a thermoplastic flat sheet in this case.
Figure 1c schematically illustrates a plan view of a complex made up of flat sheets.
Figure 2a schematically illustrates the package manufactured from the complex of Figure 1a.
Figure 2b schematically illustrates the package manufactured from the complex of Figure 1c.
Figure 2c schematically illustrates the package manufactured from the complex of Figure 1c, wherein the first sheet further comprises auxiliary flaps.
Figure 3 illustrates a complex formed by superimposing or stacking first, second, and third die cut sheets prior to being folded.
Figure 4 illustrates the superimposition of first, second, and third die cut sheets formed into their final shape.
Figure 5a shows a top perspective view of the final arrangement of the already formed sheets shown in Figure 4 and superimposed in the order in which they would be arranged in the corresponding final package.
Figure 5b shows a bottom perspective view of the final arrangement of the sheets formed in Figure 4.
Figure 6 shows the package comprising the liner or internal waterproofing covering.
Figure 7a shows the package comprising the lidding film or external covering.
Figure 7b shows the package of Figure 7a wherein the lidding film can be seen partially removed from the package.
Figure 8a schematically shows the tool comprising the mold with a central cavity and the piston.
Figure 8b schematically shows the tool of Figure 8a wherein the piston is formed by means for applying pressure and suction means.
Figure 9a shows a particular embodiment of the package with a polygonal contour having 10 sides.
Figure 9b shows a particular embodiment of the package comprising a plurality of first and/or second sheets.
Figure 10 shows an item packaged in a protective atmosphere.
Figure 11 shows a complex formed by sheets attached by articulable attachments.
Figure 12 shows a complex formed by flat sheets and a lidding film attached by articulable attachments.

### Detailed Description of the Invention

### Complex (100) made up of consecutively stacked flat sheets

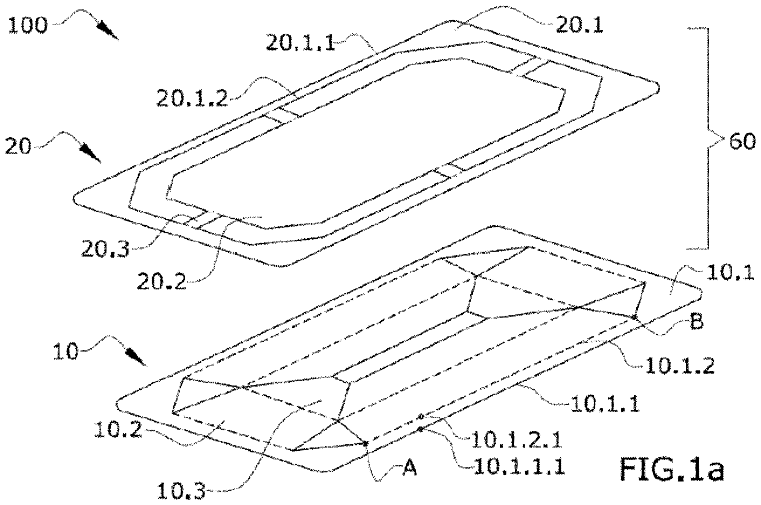

Figure 1a shows a complex (100) formed by a first die cut flat sheet (10) and an assembly (60) comprising at least one additional flat sheet. In this exemplified embodiment, said at least one additional flat sheet is a second die cut sheet (20).

Figure 1a particularly shows a first die cut flat sheet (10) comprising a first rim (10.1), wherein said rim is continuous, i.e., it is formed by a single element, being demarcated by an outer contour (10.1.1) and an inner contour (10.1.2). Said inner contour (10.1.2) further comprises a first portion (10.1.2.1) corresponding with a second portion (10.1.1.1) of the outer contour (10.1.1).

Throughout this document, "corresponding" will be understood to mean that both portions (10.1.2.1, 10.1.1.1) are the closest segments of both contours (10.1.1, 10.1.2), where there can be as many as there are first main flaps (10.2) comprised in the first sheet (10). Specifically, this embodiment of Figure 1a shows four first portions (10.1.2.1) corresponding with four respective second portions (10.1.1.1) on the four sides of the first rim (10.1). Furthermore, it can be seen that the first portion (10.1.2.1) comprises two ends identified with points A and B, wherein said first portion (10.1.2.1) belonging to the inner contour (10.1.2) is a segment that is shorter than the segment of the second portion (10.1.1.1) belonging to the outer contour (10.1.1).

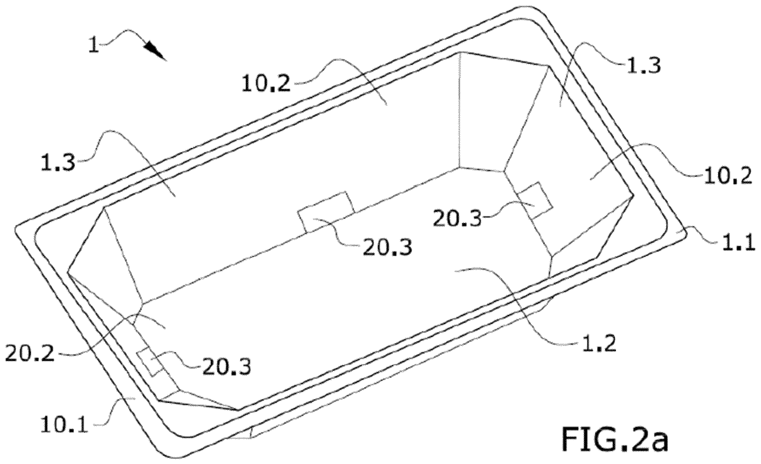

Furthermore, the first sheet (10) shown in Figure 1a further comprises four first main flaps (10.2). Said flaps extend along the first portions (10.1.2.1) of the inner contour (10.1.2) in the direction opposite the second portion (10.1.1.1) of the outer contour (10.1.1). Said first main flaps (10.2) would each form a wall (1.3) of the package (1) once it is formed (see Figure 2a for further detail).

On the other hand, taking into consideration the second die cut flat sheet (20) of the assembly (60) comprising at least one additional flat sheet, it would comprise a second rim (20.1) the outer contour (20.1.1) of which demarcates its perimeter. Said at least a second sheet (20) further comprises at least a second main flap (20.2) configured for forming a base (1.2) of the package (1) after being formed in the single run of the process of manufacturing said package (1) (see Figure 2a for further detail).

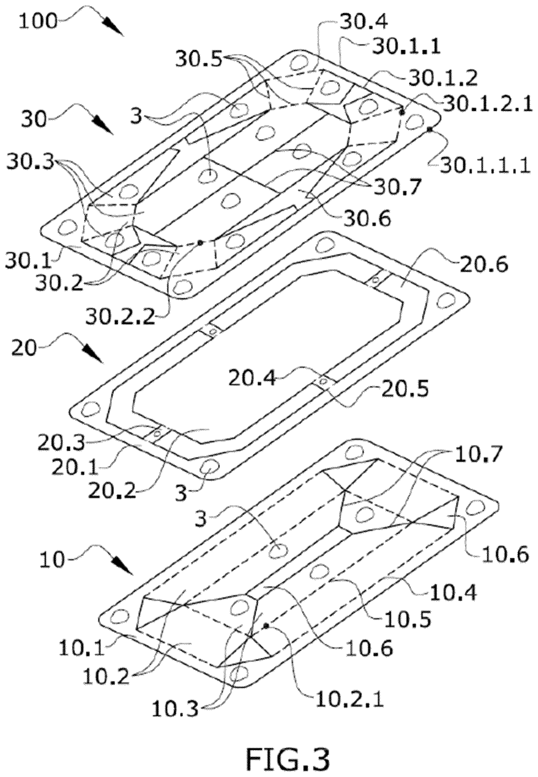

For greater detail of the components of the first die cut flat sheet (10) and second die cut sheet (20), see Figure 3 and its description.

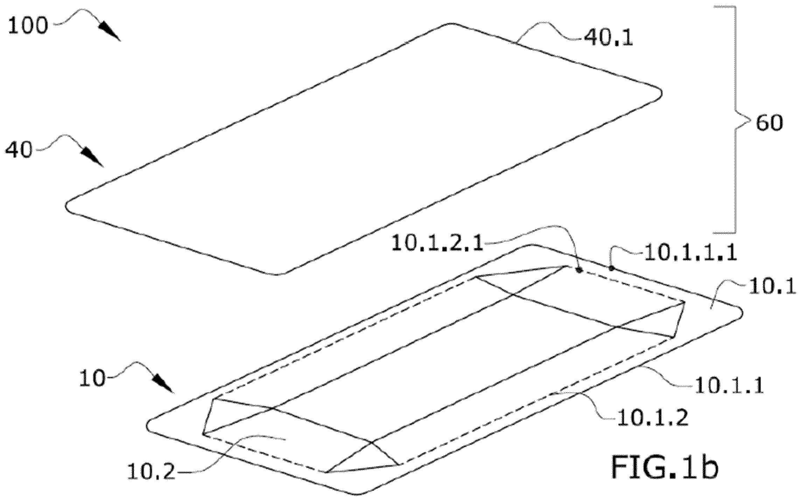

Figure 1b shows a complex (100) formed by a first die cut flat sheet (10) and an assembly (60) comprising at least one additional flat sheet. In this embodiment, said at least one additional flat sheet is a flat sheet (40) made of thermoplastic material configured for forming the liner of the package (1).

In this embodiment, the first flat sheet (10) is made up of a continuous and flat first rim (10.1) which would comprise an outer contour (10.1.1) and an inner contour (10.1.2), said contours comprising a first portion (10.1.2.1) and a second portion (10.1.1.1), respectively. Furthermore, it can be seen that said first sheet further comprises four first main flaps (10.2) as defined for Figure 1a.

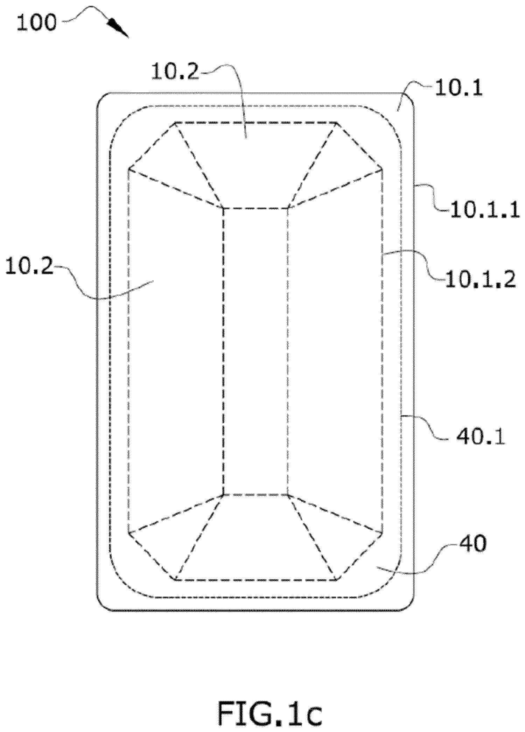

On the other hand, the flat sheet (40) made of thermoplastic material of the assembly (60) comprises a perimeter (40.1) that is demarcated by the first rim (10.1) of the first flat sheet (10) (see Figure 1c for further detail). To attach the flat sheet (40) made of thermoplastic material to any of the other sheets, such as the first sheet (10) in this case, for example, attachment means (3) are used (see Figure 3 for further detail) located:
- only on the first rim (10.1) of the first flat sheet (10), or
- adjacent to the perimeter (40.1) of the flat sheet (40) made of thermoplastic material.

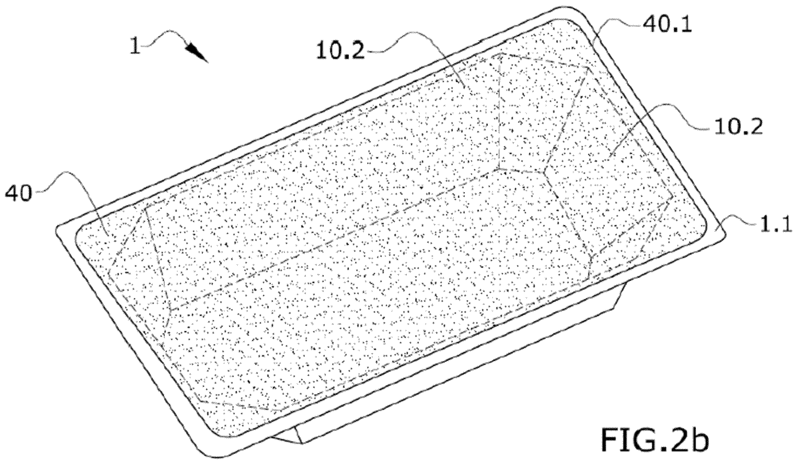

In this embodiment, it will be understood that since the package (1) is manufactured (see Figure 2b for further detail) in a single run, this sheet (40) experiences thermoforming when it comes into contact with the hot piston applying pressure and temperature to the sheet. Instead, if the piston did not incorporate heating means, the complex (100) would have previously been heated before coming into contact with said piston.

Furthermore, the perimeter of the sheet may be larger than the outer contour of the rim during the step of manufacturing the package (1), and in a later process its projecting perimeter may be trimmed or reduced.

Figure 1c shows a complex (100) made up of flat sheets seen from a plan view or a top view with respect to the stacking thereof. Said Figure 1c shows the feature that the perimeter of any of the additional flat sheets comprised in the assembly (60) is demarcated by the first rim (10.1) of the first flat sheet (10). As already discussed, the perimeter of the additional flat sheet may match up with the inner contour or with the outer contour of the first rim (10.1), or it may vary along same.

For illustrative purposes, the first die cut flat sheet (10) and the flat sheet (40) made of thermoplastic material shown in Figure 1b are shown, since they both comprise a smaller number of elements which allows for better viewing. Nevertheless, the relationship between the perimeter (40.1) of the flat sheet (40) made of thermoplastic material and the first rim (10.1) of the first flat sheet (10) would likewise apply regardless of what the at least one additional flat sheet of the assembly (60) is.

In this embodiment, the perimetral contour (40.1) of the flat sheet (40) made of thermoplastic material is shown using a dotted line, and it can be seen that it is comprised at all times within the upper and lower confines of the first rim (10.1), which would be identified with the inner contour (10.1.2) and the outer contour (10.1.1) of the first rim (10.1), respectively.

### Package (1) manufactured from the complex (100)

Figure 2a schematically shows the package (1) manufactured from the complex (100) of Figure 1a. In particular, said package (1) would be formed from the complex (100) which would comprise a first die cut sheet (10) and a second die cut sheet (20).

In this case, the rim (1.1) of the package (1) is formed by attaching the first rim (10.1) of the first sheet (10) and the second rim of the second sheet (20). As can be seen, the first main flaps (10.2) would be attached to the second auxiliary flaps (20.3) by attachment means (3) (not shown), whereas the second main flap (20.2) is attached to the first auxiliary flaps (10.3) by attachment means (3) (not shown). As can be seen, in this configuration there may be non-overlapping gaps, which would be suitable for packages (1) requiring a suitable appearance for presenting the items, or for items requiring frequent ventilation.

On the other hand, Figure 2b schematically shows the package (1) manufactured from the complex (100) of Figure 1b or the complex (100) of Figure 1c. In this example, the package (1) would be formed from the complex (100) which would comprise a first die cut sheet (10) and a flat sheet (40) made of thermoplastic material.

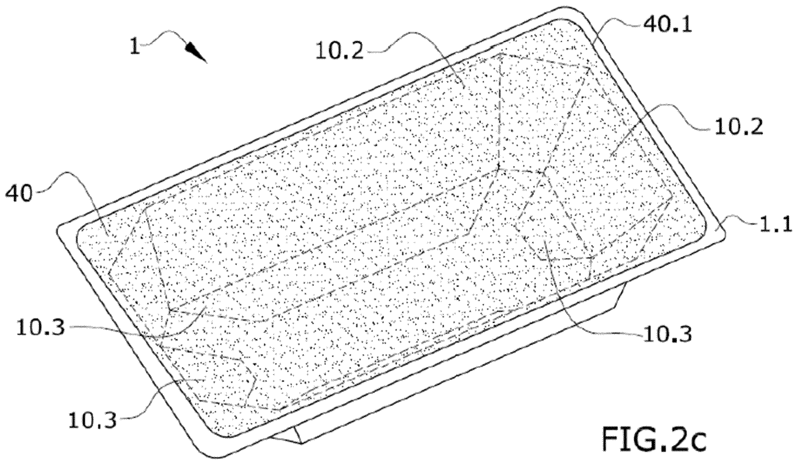

As can be seen, Figure 2c is the same embodiment as the one depicted in Figure 2b, but in which the first sheet (10) further comprises auxiliary flaps (10.3).

In the embodiments of Figures 2b and 2c, it can be seen that the perimetral contour (40.1) of the flat sheet (40) made of thermoplastic material is comprised at all times within the confines marked by the inner contour (10.1.2) and the outer contour (10.1.1) of the first rim (10.1). Furthermore, because the flat sheet (40) made of thermoplastic material would act like an internal waterproofing covering, it would be completely continuous, the elements that would be concealed being shown using dashed lines.

The internal covering or liner would be attached to the first sheet (10) only by the first rim (10.1) by means of a strong adhesive (not shown).

### Detail of the sheets (10, 20, 30) forming the complex (100) and the stacking thereof

Figure 3 shows an exploded view of a complex (100) formed by a first die cut flat sheet (10) and an assembly (60) comprising at least one additional flat sheet, wherein said assembly would be formed by a second die cut flat sheet (20) and a third die cut flat sheet (30).

It can furthermore be seen in this figure how the first die cut sheet (10), the second die cut sheet (20), and the third die cut sheet (30) would be positioned to form the complex (100) prior to their flaps being folded or collapsed for forming the package (1).

The stacking sequence shown in this figure corresponds to the first die cut sheet (10) being positioned firstly supported on a surface, and then at least a second die cut sheet (20) being placed on this first sheet (10), and finally a third die cut sheet (30) being placed on this second sheet (20). During this sheet stacking sequence, the contours of all the sheets are made to match up to make subsequent forming of the package (1) easier.

In particular, the first sheet (10) shown in Figure 3 comprises a first rim (10.1) equal to the rim (1.1) of the package (1), a plurality of first main flaps (10.2) for forming the side faces (1.3) of the package (1), and a plurality of first auxiliary flaps (10.3). Furthermore, said first sheet (10) comprises a set of first holes or notches (10.6) and a set of first cuts or incisions (10.7) making it easier to fold both the first main flaps (10.2) and the first auxiliary flaps (10.3). The distribution, the shape, and the number of said first holes (10.6) and cuts (10.7) form the predefined drawing of the die cutting of the first sheet (10).

Additionally, the first sheet (10) comprises a plurality of first main folding lines (10.4) configured for acting as bending axes for folding the first main flaps (10.2), and it further comprises a plurality of first auxiliary folding lines (10.5) configured for acting as bending axes for folding the first auxiliary flaps (10.3).

In this embodiment, a first portion (10.1.2.1) of the inner contour (10.1.2) is understood to correspond to a first main folding line (10.4), whereas an opposite end (10.2.1) of the first main flap (10.2) is understood to correspond to a first auxiliary folding line (10.5). The same also occurs in Figures 1a-1c.

On the other hand, the second sheet (20) shown in Figure 3 comprises a second rim (20.1) equal to the rim (1.1) of the package (1), at least a second main flap (20.2) for forming the base (1.2) of the package (1), and a plurality of second auxiliary flaps (20.3). The at least a first main flap (20.2) is preferably only one first main flap (20.2). Furthermore, said second sheet (20) comprises a set of second holes or notches (20.6) and a set of second cuts or incisions (not shown in these embodiments) making it easier to fold both the second main flap (20.2) and the second auxiliary flaps (20.3). The distribution, the shape, and the number of said second holes (20.6) and cuts thereby form the predefined drawing of the die cutting of the second sheet (20).

The second auxiliary flap (20.3) preferably comprises a frangible attachment with the inner contour (20.1.2) of the second rim (20.1).

Furthermore, the second sheet (20) comprises a plurality of second main folding lines (20.4) acting like bending axes for folding the second main flap (20.2) with respect to the second auxiliary flap (20.3), and it further comprises a plurality of second auxiliary folding lines (20.5) acting like bending axes for folding the assembly of the second auxiliary flaps (20.3) together with the second main flap (20.2). It can be seen that the plurality of second auxiliary folding lines (20.5) are in the inner contour (20.1.2) of the second rim (20.1). Additionally, the frangible attachment is an auxiliary folding line (20.5). Said frangible attachment preferably comprises a series of cuts for weakening said attachment.

Likewise, the third sheet (30) shown in Figure 3 comprises a third rim (30.1) equal to the rim (1.1) of the package (1), a plurality of third main flaps (30.2) for forming the corners (1.4) of the package (1), which are preferably chamfered, and a plurality of third auxiliary flaps (30.3). Furthermore, said third sheet (30) comprises a set of third holes (30.6) and a set of third cuts (30.7) making it easier to fold both the third main flaps (30.2) and the third auxiliary flaps (30.3). The distribution, the shape, and the number of said third holes (30.6) and cuts (30.7) form the predefined drawing of the die cutting of the third sheet (30).

Additionally, the third sheet (30) comprises a plurality of third main folding lines (30.4) configured for acting as bending axes for folding the third main flaps (30.2), and it further comprises a plurality of third auxiliary folding lines (30.5) configured for acting as bending axes for folding the third auxiliary flaps (30.2).

Specifically, in this embodiment a first portion (30.1.2.1) of the inner contour (30.1.2) is understood to correspond to a third main folding line (30.4), whereas a second end (30.2.2) of the third main flap (30.2) is understood to correspond to a third auxiliary folding line (30.5).

Again taking into consideration the third die cut flat sheet (30), it comprises a third rim (30.1), wherein said rim is continuous and is demarcated by an outer contour (30.1.1) and an inner contour (30.1.2). Said inner contour (30.1.2) comprises corresponding chamfered corners. Said chamfered corners are first portions (30.1.2.1) each corresponding with a second portion (30.1.1.1) of the outer contour (30.1.1). It should be stated that "corresponding" will be understood as having the same meaning as for the first sheet (10), but being applied to the elements of the third sheet (30).

Throughout this document, "holes" or "notches" (10.6, 20.6, 30.6) will be understood as local absences of material which are distributed in the space demarcated by their respective rims (10.1, 20.1, 30.1) and make it easier to fold the main flaps (10.2, 20.2, 30.2). On the other hand, cuts or incisions (10.7, 30.7) mean that there is not an absence of material with respect to the original, i.e., the edges of the cut are located adjacent to one another.

It should be pointed out that not each and every one of the elements described above is indicated in these figures in order to make it easier to understand the reference numbers. The same occurs in the other figures of the present application.

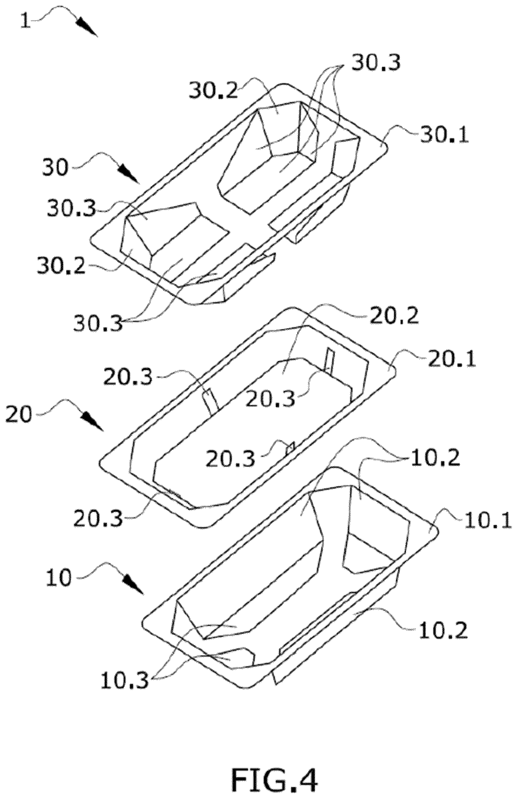

Figure 4 shows an exploded view of how the first die cut sheet (10), the second die cut sheet (20), and the third die cut sheet (30) for forming the package (1) are positioned once all their main and auxiliary flaps have been folded into the final configuration. Said final configuration of the folding of both the main and the auxiliary flaps is the one which would be shown separately when they form the already formed package (1). As can be seen, all the main and auxiliary flaps have been folded using their respective main and auxiliary folding lines, accordingly.

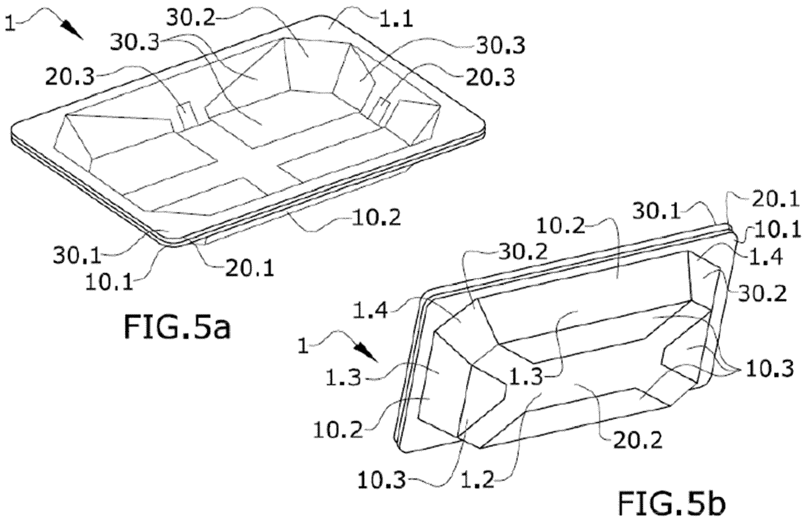

Figure 5a and 5b illustrate the final arrangement of the already folded sheets (10, 20, 30), i.e., with all their flaps collapsed into the final configuration, forming the package (1). Figure 5a particularly allows observing a top view of the package (1) formed with the sheets already folded into the final configuration once they have been stacked. On the other hand, Figure 5b allows observing said package (1) from a bottom view.

Both figures show the spaces formed between the different flaps of one and the same sheet once they are folded into their final configuration, and wherein in this specific case with the three folded sheets, flaps of different sheets overlap said spaces, producing a compact package (1). In a preferred embodiment, the auxiliary flaps are arranged for overlapping the attachment of two main flaps of different sheets in those locations and directions where it is most likely that the two main flaps will separate from one another. This likelihood of them separating from one another is due to the loads attributed to the weight of the item (2) contained therein, understanding that said item causes a localized load that is distributed throughout the entire package (1), being transferred through the flaps between different sheets. The attachment of an auxiliary flap of one sheet with a main flap of another sheet makes said transfer and distribution of loads possible.

In order to keep said auxiliary flap of one sheet attached to a main flap of another sheet, attachment means (3) are used on the face of the auxiliary flaps that will face the corresponding main flap. Furthermore, said attachment means (3) are put on the faces of the perimetral rims in contact with one another. Figure 3 shows some examples of where the attachment means (3) can be applied on the different sheets; however, these examples are not limiting, where the exact position may vary, or there may not be attachment means (3) on each and every one of the flaps, besides on the respective rims thereof. Said attachment means (3) are not shown in the following figures for illustrative purposes.

Throughout the document, the terms face and surface in reference to the main flaps and/or auxiliary flaps and/or contours are understood to be considered equivalent to one another.

Said attachment means are preferably hot glue, such as a thermoplastic adhesive. This adhesive is designed for working under shearing between the flaps, and it additionally must have an adhesive strength, i.e., between the flap and adhesive, that is greater than the cohesive strength, i.e., between the molecules of the adhesive itself. Therefore, if stresses exceed at any point the maximum cohesive strength, the main and auxiliary flaps of different sheets will only become detached, not causing cracking, which may lead to the package (1) tearing altogether.

### Internal covering (40) and external covering (50) of the package (1)

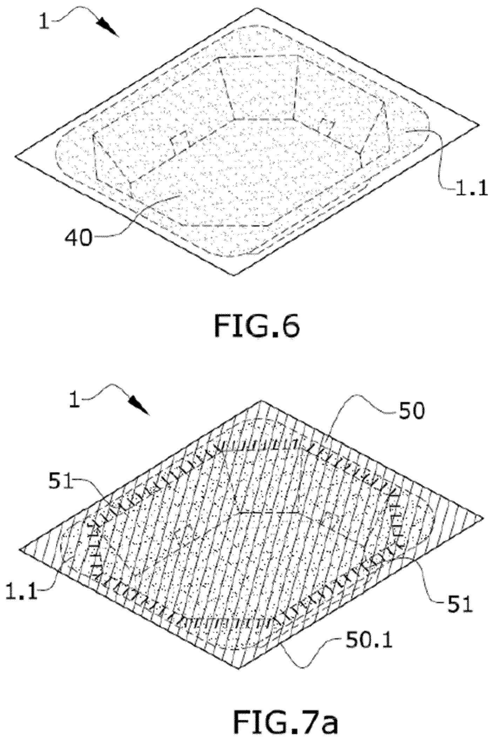

Figure 6 shows an embodiment of the package (1) further comprising an internal covering (40) or liner. This internal covering (40) is thermoformed during the formation of the package (1) from the flat sheet (40) made of thermoplastic material. Furthermore, the liner (40) is configured for waterproofing the inside of the package (1). As can be seen in Figure 6, said internal covering (40) completely covers the inside of the package (1) internally with respect to the contour of the rim (1.1) of the package (1). Throughout this explanation, the terms "internal covering" and "liner" will be understood to be equivalent.

In the event that said internal covering (40) projects beyond the contour of the rim (1.1), the excess portion can be trimmed or adapted so that its contour matches up with said rim (1.1) of the package (1).

Throughout the document, to distinguish the internal covering (40) from the lid (50), the liner (40) is shown with dots, whereas the lid (50) is shown with lines.

Figure 7a shows the package (1) further comprising an external covering or lidding film (50), both terms being understood as being equivalent. Said lidding film (50) is attached stretched out only along the rim (1.1) of the package (1), without creases or bowing. Furthermore, the heat-sealed attachment (51) keeping the lidding film attached with the rim (1.1) of the package (1) can be seen. Said heat-sealed attachment (51) is preferably performed between the lidding film (50) and the internal covering (40) along the rim (1.1) of the package (1), when both coverings are arranged on the package (1). This heat-sealing of both coverings is made easier because the rim (1.1) formed from the rims (10.1, 20.1, 30.1) of the sheets forming the package (1) is completely flat.

Like in Figure 6, in the event that said lidding film (50) projects beyond the contour of the rim (1.1), the excess portion can be trimmed or adapted so that its contour matches up with said rim (1.1) of the package (1). This is understood as the perimeter (50.1) of the lidding film (50) being trimmed until it is within the confines of said rim (1.1) of the package (1), or in other words within the confines of the first rim (10.1) of the first sheet (10).

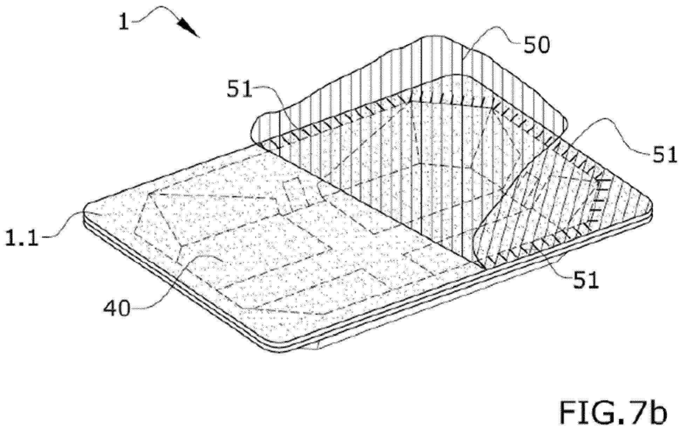

Figure 7b shows the package (1) of Figure 7a wherein the lidding film (50) can be seen partially removed from the package (1). This occurs because the heat-sealed attachment (51) progressively breaks upon pulling on the lidding film (50), this action corresponding to the usual manner of "opening" the package (1) to access the inside thereof and handle the item (2) contained therein. As can be seen, the internal covering (40) is kept attached to the package (1) by means of the strong adhesive, whereas peeling or removal of the lidding film (50) occurs under normal conditions.

### Tool (6) comprising a mold (4) and a piston (5) for manufacturing the package (1)

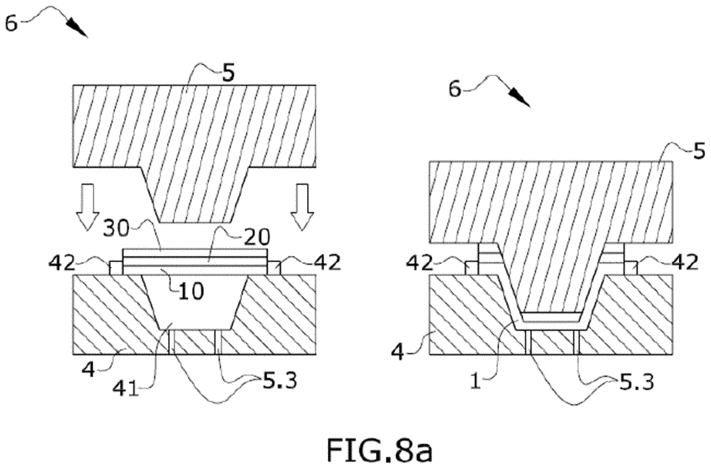

Figure 8a schematically shows an embodiment of a tool (6) comprising a mold (4) and a piston (5). In said embodiment, the mold (4) comprises a central cavity (41) and retainers (42). Said retainers (42) are spaced according to the dimensions of the rim (1.1) of the package (1), their function being to hold said rim (1.1) of the package (1) down and/or keep it immobile such that it matches up with the perimeter of the central cavity (41) .

On the other hand, Figure 8a shows a piston (5) reproducing the final configuration of the package (1). Said piston (5) moves vertically downwards, as indicated by the arrow that is shown, the passage thereof causing both the main and the auxiliary flaps of the different sheets to fold, in addition to causing the thermoforming of the liner (40) (where appropriate) until achieving the final configuration of the package (1).

The figure shown on the left in Figure 8a is a schematic depiction of how the complex (100) or the stack of sheets (10, 20, 30) is positioned on the mold prior to the package (1) being formed. The image on the right shows the final situation in which the piston has completely descended to a predefined height corresponding with the depth of the package (1), and the package (1) with the final configuration is comprised between the central cavity (41) reproducing its outer shape, and the piston (5) reproducing the inside of said package (1). Furthermore, the piston (5) comprises holes (5.3) distributed in the central cavity of the mold that allow the air to exit from the inside of said central cavity. As can be seen, the step of forming the package (1) from the assembly shown in the image on the left takes place in a single run, i.e., in a single action of pressing the stacked sheets with the piston.

Furthermore, the piston (5) can incorporate heating means to make it easier to disperse the attachment means (3) when they consist of hot glue, such as thermoplastic adhesives.

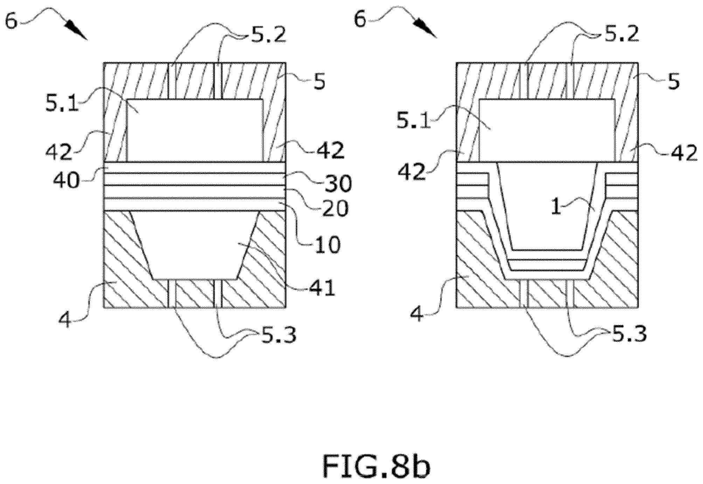

Figure 8b schematically shows a particular example of the tool (6) comprising a mold (4) and a piston (5). In said example, the mold (4) comprises a central cavity (41) and retainers (42). Said retainers (42) are positioned for holding the rim (1.1) of the package (1) down and keeping it immobile such that it matches up with the perimeter of the central cavity (41). Furthermore, said retainers (42) make leak-tight an upper cavity (5.1) of the piston (5) located above the mold and incorporating injectors (5.2) for applying pressurized air on the outer face of the upper sheet of the stacking, which is the internal covering or liner (40) in this example. Furthermore, the piston (5) comprises holes distributed in the central cavity of the mold that allow the air to exit from the inside of said central cavity. Said holes preferably comprise suction means (5.3) for extracting the air from the inside of said cavity, which help with the process for forming the final configuration.

The figure shown on the left in Figure 8b is a schematic depiction of how the stack of sheets (10, 20, 30) and internal covering (40) are positioned on the mold prior to the package (1) being formed. The image on the right shows the final situation in which both the injectors (5.2) and the suction means (5.3) of the piston have applied compressed air on one a face and suction on the opposite face of the package (1), the package (1) with the final configuration being in contact with the walls of the central cavity (41) reproducing its outer shape.

Furthermore, heating means would be arranged to cause the thermoforming of the internal covering or liner (40).

### Specific embodiments of the package (1)

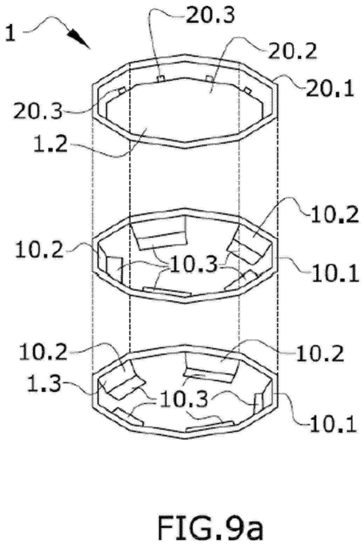

Figure 9a shows a particular embodiment of the package (1) comprising 10 side faces (1.3). In this embodiment, the chamfered corners (1.4) of the package (1) have been contemplated as side faces (1.3) of the package (1). It is thereby understood that said side faces (1.3) and chamfered corners (1.4) can be considered equivalent for carrying out the invention.

In this embodiment, the following is contemplated:
▪ at least a second sheet (20) forming the base (1.2) of the package (1); and
▪ at least another sheet, either the first sheet or third sheet (10, 30), forming one of the side faces (1.3) or chamfered corners (1.4), which are understood as equivalent, being alternating in the package (1).

Therefore, one and the same sheet, either the first sheet (10) or the third sheet (30), does not form:
▪ a side face (1.3) and a chamfered corner (1.4) adjacent to one another; or
▪ two side faces (1.3), or chamfered corners (1.4), adjacent and consecutive with respect to one another when they are considered equivalent;
since subsequent folding thereof would be hindered. In the event that neither the first cut (10.7) nor the third cut (30.7) exists, and/or the first hole (10.6) nor the third hole (30.6) exists, between main flaps of one and the same sheet (10, 30), this condition is applicable to any embodiment of the invention.

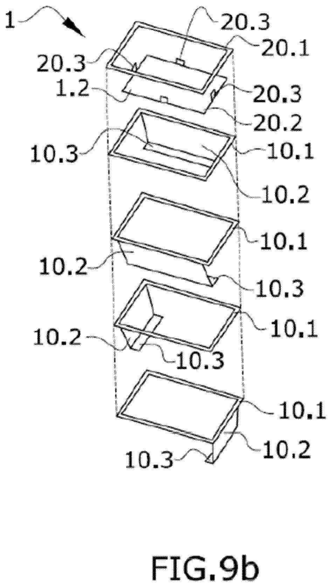

Figure 9b shows a particular embodiment of the package (1) comprising four side faces (1.3). Like for the embodiment shown in Figure 9a, the side faces (1.3) of the package (1) are considered equivalent to the chamfered corners (1.4) of the package (1), so using first sheets (10) or third sheets (30) for forming the side faces (1.3) or chamfered corners (1.4), respectively, are considered equivalent to one another.

In this embodiment, a plurality of first sheets (10) and/or third sheets (30) are placed on the preceding sheet in the stacking sequence by making the contours of their rims (10.1, 30.1) match up in order to made subsequent forming of the package (1) easier. Furthermore, each of the first sheets (10) and/or third sheets (30) comprises a main flap (10.2) forming a side face (1.3) of the package (1) in the folding thereof and an auxiliary flap (10.3).

The last sheet to be stacked in the stacking sequence of this embodiment is the second sheet (20) which comprises a second main flap forming the base (1.2) of the package (1) and a plurality of second auxiliary flaps (20.3). The stacking order of the sheets is therefore understood as being modifiable depending on the specific design of the drawing that said die cut sheets have, this process of stacking in this case being equivalent to the process described in the preceding paragraphs.

### Item (2) packaged in a modified atmosphere

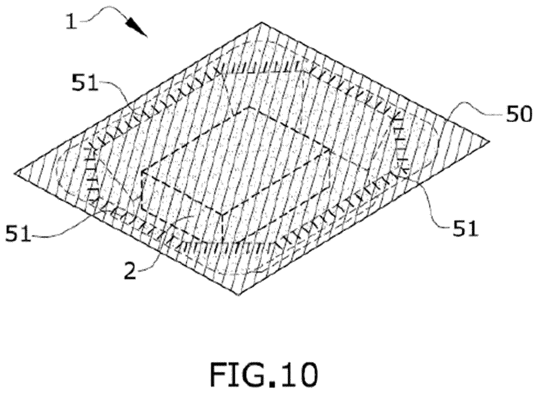

Figure 10 shows an item (2), wherein said item can be packaged in a protective atmosphere, in vacuum, or in a normal atmosphere. The package (1) is formed from the complex (100) made up of consecutively stacked flat sheets, said complex (100) comprising in this case die cut sheets comprising foldable flaps, in addition to an internal covering (40) and an external covering (50) attached by means of a heat-sealed attachment (51). Furthermore, the item (2) contained therein can be seen, preferably being a food product.

### Complex (100) formed by sheets attached by an articulable attachment (7)

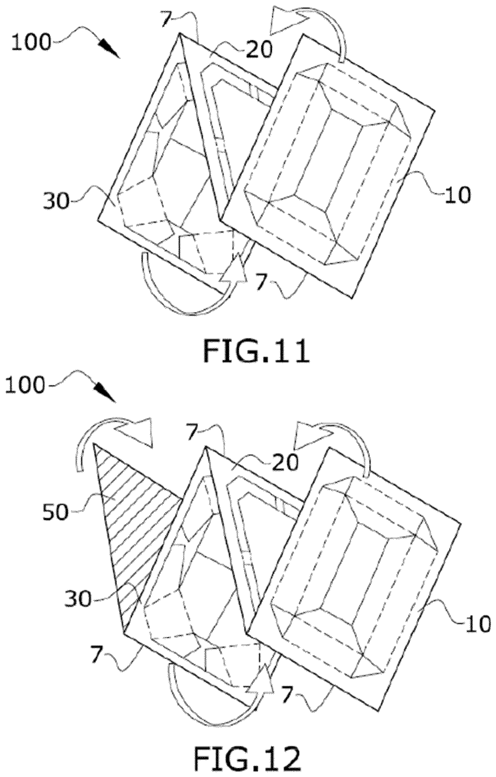

Figure 11 shows the complex (100) illustrated in Figure 3, wherein the first sheet (10) is attached in an articulable manner by its outer contour (10.1.1) to the perimeter of at least one additional flat sheet of the assembly (60). The sheets are thereby stacked by means of their bending along the articulable attachment. Said bending has been schematically depicted in Figures 11 and 12 by means of the arrows that are drawn.

In particular, the first sheet (10) would comprise an articulable attachment (7) with the second sheet (20), whereas the second sheet (20) would comprise an articulable attachment (7) with the third sheet (30), the articulable attachments (7) being on two opposite sides of the outer contour (20.1.1) of the second rim (20.1) of the second sheet (20). In other words, the sheets are obtained attached together in the form of a triptych by articulable attachments (7), allowing them to be flat when they are unfolded and to be stacked when their articulable attachments (7) are bent.

Figure 12 shows the complex (100) illustrated in Figure 11 further comprising a lid (50). In particular, the first sheet (10) is attached in an articulable manner by its outer contour (10.1.1) to the perimeter of at least one additional flat sheet of the assembly (60) wherein it is furthermore attached in an articulable manner to the lid (50). The sheets are thereby stacked by means of their bending along the articulable attachment.

In particular, the first sheet (10) would comprise an articulable attachment (7) with the second sheet (20), whereas the second sheet (20) would comprise an articulable attachment (7) with the third sheet (30), whereas the third sheet (30) would comprise an articulable attachment (7) with the lid (50), the articulable attachments (7) being on two opposite sides of the outer contour (30.1.1) of the third rim (30.1) of the third sheet (30). In other words, the sheets are obtained attached in the form of a quadriptych by articulable attachments, allowing them to be flat when they are unfolded and to be stacked when their articulable attachments (7) are bent.

## Claims

1. A complex (100) made up of consecutively stacked flat sheets, **characterized in that** it is configured for forming a package (1) in a single run, preferably for containing food products, wherein said complex comprises:
• at least a first die cut flat sheet (10) configured for being folded, comprising a continuous first rim (10.1) demarcated by an outer contour (10.1.1) and an inner contour (10.1.2), wherein said inner contour (10.1.2) comprises a first portion (10.1.2.1) and the outer contour (10.1.1) comprises first (10.1.2.1) a second portion (10.1.1.1), said and second (10.1.1.1) portions corresponding with one another;
o wherein said at least first die cut flat sheet (10) further comprises at least a first main flap (10.2) extending along the first portion (10.1.2.1) of the inner contour (10.1.2) in the direction opposite the second portion (10.1.1.1) of the outer contour (10.1.1), the first main flap (10.2) being configured for forming a wall (1.3) of the package (1); and
• an assembly (60) comprising at least one additional flat sheet, wherein at least one of the at least one additional flat sheet of the assembly (60) is a second die cut flat sheet (20) configured for being folded, comprising a second rim (20.1) the outer contour (20.1.1) of which demarcates its perimeter, wherein said at least a second die cut flat sheet (20) further comprises:
- at least a second main flap (20.2) configured for forming a base of the package (1),
said complex (100) being **characterized in that**: the perimeter of any of the at least one additional flat sheet is demarcated by the first rim (10.1) of the first flat sheet (10) such that it is kept within the confines of the inner (10.1.2) and outer (10.1.1) contours of the first flat sheet (10).

2. The complex (100) made up of flat sheets according to claim 1, **characterized in that** the at least a first die cut flat sheet (10) further comprises at least a first auxiliary flap (10.3) connected to the first main flap (10.2) and configured for being part of the base (1.2) of the package (1).

3. The complex (100) made up of flat sheets according to any of claims 1 or 2, **characterized in that** the at least a second die cut flat sheet (20) further comprises at least a second auxiliary flap (20.3) located between the second main flap (20.2) and the second rim (20.1).

4. The complex (100) made up of flat sheets according to the preceding claim, **characterized in that** at least a second auxiliary flap (20.3) of the at least a second sheet (20) comprises a frangible attachment with the inner contour (20.1.2) of the second rim (20.1).

5. The complex (100) made up of flat sheets according to any of the preceding claims, **characterized in that** at least one of the at least one additional flat sheet of the assembly (60) is one flat sheet (40) made of thermoplastic material configured for forming the liner of the package (1).

6. The complex (100) made up of flat sheets according to any of the preceding claims, **characterized in that** at least one of the at least one additional flat sheet of the assembly (60) is a third die cut flat sheet (30) configured for being folded, comprising a third rim (30.1) with corners on its inner contour (30.1.2), wherein its outer contour (30.1.1) demarcates its perimeter, wherein said at least a third sheet (30) further comprises:
• at least a third main flap (30. 2) substantially diagonal to one of the corners of the inner con tour (30.1.2) and connected with the third rim (30.1) by a first portion (30.1.2.1) of said third rim (30.1), said main flap (30.2) being configured for forming at least one chamfered corner (1.4) of the package (1).

7. The complex (100) made up of flat sheets according to the preceding claim, **characterized in that** at least a third main flap (30. 2) further comprises at least a third auxiliary flap (30.3) located at a second end (30.2.2) of the at least a third main flap (30.2), the third auxiliary flap (30. 3) being configured for being supported on the at least a first auxiliary flap (10.3) and/or main flap (10.2) and/or on the at least second auxiliary flap (20.3) and/or main flap (20.2).

8. The complex (100) made up of flat sheets according to any of claims 1 to 7, **characterized in that** at least one additional flat sheet of the assembly (60) is a flat sheet (50) configured for forming a lid such that an item (2) contained in the package (1) is covered once the package (1) has been formed, said flat sheet (50) preferably being made of a thermoplastic material.

9. The complex (100) made up of flat sheets according to any of the preceding claims, **characterized in that** the complex (60) further comprises attachment means ( 3) located on the at least a first flat sheet (10) and/or at least one flat sheet of the assembly (60).

10. The complex (100) made up of flat sheets according to the preceding claim, **characterized in that** the attachment means (3) are hot glue, preferably a thermoplastic adhesive.

11. The complex (100) made up of flat sheets according to the preceding claim and claim 5, **characterized in that** the attachment means (3) are located on the first flat sheet (10) or on at least one flat sheet (40) made of thermoplastic material and are a strong adhesive, the adhesive being placed only on the first rim (10.1) or adjacent to the perimeter (40.1) of the flat sheet (40) made of thermoplastic material, respectively.

12. The complex (100) made up of flat sheets according to any of the preceding claims, **characterized in that** at least one of the at least a first die cut flat sheet (10), and/or the at least a second die cut flat sheet (20), are manufactured from a cellulosic material, such as paper, pressboard, or corrugated cardboard.

13. The complex (100) made up of flat sheets according to any of the preceding claims, **characterized in that** at least one of the at least a third die cut flat sheet (30) is manufactured from a cellulosic material, such as paper, pressboard, or corrugated cardboard.

14. The complex (100) made up of flat sheets according to any of the preceding claims, **characterized in that** the at least a first sheet (10) is attached in an articulable manner by its outer contour (10.1.1) to the perimeter of at least one additional flat sheet of the assembly (60), so that the sheets are thereby stacked by means of their bending along said articulable attachment (7).

15. A method for obtaining a complex (100) made up of consecutively stacked flat sheets according to any of claims 1 to 14, said complex (100) being configured for forming a package (1) in a single run, **characterized in that** the method comprises the steps of:
a) providing at least a first die cut flat sheet (10) configured for being folded, comprising a first rim (10.1) demarcated by an inner contour (10.1.2) and an outer contour (10.1.1); and
b) providing an assembly (60) comprising at least one additional flat sheet, including at least one second die cut flat sheet (20), the perimeter of any of which is demarcated by the first rim (10.1) of the first flat sheet (10) such that it is kept within the confines of the inner (10.1.2) and outer (10.1.1) contours of the first flat sheet (10);
wherein at least one of the at least one additional flat sheet of the assembly (60) is a second die cut flat sheet (20) configured for being folded, comprising a second rim (20.1) the outer contour (20.1.1) of which demarcates its perimeter,
wherein said at least a second sheet (20) further comprises:
• at least a second main flap (20.2) configured for forming a base (1.2) of the package (1).

16. The method for obtaining a complex (100) made up of flat sheets according to claim 15, **characterized in that** the method further comprises the steps of:
c) providing attachment means (3);
d) placing the attachment means (3) on at least the first rim (10.1) of the first flat sheet (10) and positioning at least one additional sheet on the first flat sheet (10) by making its perimeter match up between the inner contour (10.1.2) and outer contour (10.1.1) of the first flat sheet (10).

17. A method for manufacturing a package (1) for containing items (2), preferably food products, **characterized in that** it comprises the steps of:
a) providing a complex (100) made up of flat sheets according to claim 1 or a complex (100) obtained according to claim 15;
b) providing a mold (4) and a piston (5) configured for pressing flat sheets;
c) positioning the first rim (10.1) of the first flat sheet (10) of the package (1) on the mold (4);
d) introducing the piston (5) acting on the center of at least one additional flat sheet of the assembly (60);
e) stopping the introduction of the piston once a predefined height of the depth of said package (1) has been achieved.

18. A method for packaging at least one item (2), preferably food products, **characterized in that** it comprises the steps of:
i. providing a package (1) manufactured according to the method of claim 17;
ii. introducing at least one item (2) inside the package (1);
iii. positioning a lid (50) thereon which comprises a perimeter (50.1) with a value demarcated by the first rim (10.1) of the first flat sheet (10); and
iv. attaching along the first rim (10.1) of the first flat sheet (10) by causing the attachment of at least one additional flat sheet of the assembly ( 60) with the lid (50), the inside of said package (1) being thereby leak-tight.

19. The method according to the preceding claim, **characterized in that** a determined atmosphere or a vacuum is applied after step ii), which achieves packaging in a modified atmosphere, or a vacuum inside the package, and prevents the leakage or loss thereof by means of making it leak-tight after step iv).

## Patentansprüche

1. Komplex (100), der aus aufeinanderfolgend gestapelten flachen Folien zusammengesetzt ist, **dadurch gekennzeichnet, dass** er konfiguriert ist, um in einem einzigen Durchlauf eine Verpackung (1), vorzugsweise zur Aufnahme von Lebensmittelprodukten, auszubilden, wobei dieser Komplex aufweist:
• wenigstens eine erste ausgestanzte flache Folie (10), die konfiguriert ist, um gefaltet zu werden, die einen zusammenhängenden ersten Rand (10.1) aufweist, der durch eine Außenumrisslinie (10.1.1) und eine Innenumrisslinie (10.1.2) abgegrenzt wird, wobei die Innenumrisslinie (10.1.2) einen ersten Abschnitt (10.1.2.1) aufweist und die Außenumrisslinie (10.1.1) einen zweiten Abschnitt (10.1.1.1) aufweist, wobei diese ersten (10.1.2.1) und zweiten (10.1.1.1) Abschnitte einander entsprechen;
° wobei wenigstens die erste ausgestanzte flache Folie (10) ferner wenigstens eine erste Hauptklappe (10.2) aufweist, die sich entlang des ersten Abschnitts (10.1.2.1) der Innenumrisslinie (10.1.2) in die Richtung entgegengesetzt zu dem zweiten Abschnitt (10.1.1.1) des Außenumrisses (10.1.1) erstreckt, wobei die erste Hauptklappe (10.2) konfiguriert ist, um eine Wand (1.3) der Verpackung (1) auszubilden; und
• eine Anordnung (60), die wenigstens eine zusätzliche flache Folie aufweist, wobei wenigstens eine der wenigstens einen zusätzlichen flachen Folie der Anordnung (60) eine zweite ausgestanzte flache Folie ist, die konfiguriert ist, um gefaltet zu werden, einen zweiten Rand aufweist, dessen Außenumrisslinie ihren Umfang abgrenzt, wobei die wenigstens eine zweite Folie ferner aufweist:
- wenigstens eine zweite Hauptklappe, die konfiguriert ist, um einen Boden der Verpackung auszubilden,
wobei der Komplex **dadurch gekennzeichnet ist, dass**: der Umfang jeder beliebigen der wenigstens einen zusätzlichen flachen Folie durch den ersten Rand (10.1) der ersten flachen Folie (10) abgegrenzt wird, so dass er innerhalb der Abgrenzungen der Innen- und Außenumrisslinien der ersten flachen Folie bleibt.

2. Komplex (100), der aus flachen Folien nach Anspruch 1 zusammengesetzt ist, **dadurch gekennzeichnet, dass** die wenigstens eine erste ausgestanzte flache Folie (10) ferner wenigstens eine erste Hilfsklappe (10.3) aufweist, die mit der ersten Hauptklappe (10.2) verbunden ist und konfiguriert ist, um ein Teil des Bodens (1.2) der Verpackung (1) zu sein.

3. Komplex (100), der aus flachen Folien nach einem der Ansprüche 1 oder 2 zusammengesetzt ist, **dadurch gekennzeichnet, dass** die wenigstens eine zweite ausgestanzte flache Folie (20) ferner wenigstens eine zweite Hilfsklappe (20.3) aufweist, die zwischen der zweiten Hauptklappe (20.2) und dem zweiten Rand (20.1) angeordnet ist.

4. Komplex (100), der aus flachen Folien nach dem vorhergehenden Anspruch zusammengesetzt ist, **dadurch gekennzeichnet, dass** wenigstens eine zweite Hilfsklappe (20.3) der wenigstens einen zweiten Folie (20) eine zerbrechliche Befestigung an der Innenumrisslinie (20.1.2) des zweiten Rands (20.1) aufweist.

5. Komplex (100), der aus flachen Folien nach einem der vorhergehenden Ansprüche zusammengesetzt ist, **dadurch gekennzeichnet, dass** wenigstens eine der wenigstens einen zusätzlichen flachen Folie der Anordnung (60) eine flache Folie (40) ist, die aus thermoplastischem Material hergestellt ist, das konfiguriert ist, um die Auskleidung der Verpackung (1) auszubilden.

6. Komplex (100), der aus flachen Folien nach einem der vorhergehenden Ansprüche zusammengesetzt ist, **dadurch gekennzeichnet, dass** wenigstens eine der wenigstens einen zusätzlichen flachen Folie der Anordnung (60) eine dritte ausgestanzte flache Folie (30) ist, die konfiguriert ist, um gefaltet zu werden, die einen dritten Rand (30.1) mit Ecken auf ihrer Innenumrisslinie (30.1.2) aufweist, wobei die wenigstens eine dritte Folie (30) ferner aufweist:
• wenigstens eine dritte Hauptklappe (30.2), die im Wesentlichen diagonal zu einer der Ecken der Innenumrisslinie (30.1.2) ist und durch einen ersten Abschnitt (30.1.2.1) des dritten Rands (30.1) mit dem dritten Rand (30.1) verbunden ist, wobei die Hauptklappe (30.2) konfiguriert ist, um wenigstens eine abgeschrägte Ecke (1.4) der Verpackung (1) auszubilden.

7. Komplex (100), der aus flachen Folien nach dem vorhergehenden Anspruch zusammengesetzt ist, **dadurch gekennzeichnet, dass** wenigstens eine dritte Hauptklappe (30.2) ferner wenigstens eine dritte Hilfsklappe (30.3) aufweist, die an einem zweiten Ende (30.2.2) der wenigstens einen dritten Hauptklappe (30.2) angeordnet ist, wobei die dritte Hilfsklappe (30.3) konfiguriert ist, um auf der wenigstens einen ersten Hilfsklappe (10.3) und/oder Hauptklappe (10.2) und/oder auf der wenigstens einen zweiten Hilfsklappe (20.3) und/oder Hauptklappe (20.2) gehalten zu werden.

8. Komplex (100), der aus flachen Folien nach einem der Ansprüche 1 bis 7 zusammengesetzt ist, **dadurch gekennzeichnet, dass** wenigstens eine zusätzliche flache Folie der Anordnung (60) eine flache Folie (50) ist, die konfiguriert ist, um einen Deckel auszubilden, so dass ein in der Verpackung (1) enthaltener Gegenstand (2) bedeckt ist, wenn die Verpackung (1) einmal ausgebildet wurde, wobei die flache Folie (50) vorzugsweise aus einem thermoplastischen Material hergestellt ist.

9. Komplex (100), der aus flachen Folien nach einem der vorhergehenden Ansprüche zusammengesetzt ist, **dadurch gekennzeichnet, dass** der Komplex (60) ferner Befestigungseinrichtungen (3) aufweist, die auf der wenigstens einen ersten flachen Folie (10) und/oder wenigstens einer flachen Folie der Anordnung (60) angeordnet sind.

10. Komplex (100), der aus flachen Folien nach dem vorhergehenden Anspruch zusammengesetzt ist, **dadurch gekennzeichnet, dass** die Befestigungseinrichtungen (3) Heißkleber, vorzugsweise ein thermoplastischer Klebstoff, sind.

11. Komplex (100), der aus flachen Folien nach dem vorhergehenden Anspruch und Anspruch 5 zusammengesetzt ist, **dadurch gekennzeichnet, dass** die Befestigungseinrichtungen (3) auf der ersten flachen Folie (10) oder auf wenigstens einer flachen Folie (40), die aus thermoplastischem Material hergestellt ist, angeordnet sind und ein starker Klebstoff sind, wobei der Klebstoff jeweils nur auf dem ersten Rand (10.1) oder benachbart zu dem Umfang (40.1) der aus thermoplastischem Material hergestellten flachen Folie (40) angeordnet wird.

12. Komplex (100), der aus flachen Folien nach einem der vorhergehenden Ansprüche zusammengesetzt ist, **dadurch gekennzeichnet, dass** wenigstens eine der wenigstens einen ersten ausgestanzten flachen Folie (10) und/oder der wenigstens einen zweiten ausgestanzten flachen Folie (20) aus einem zellulosehaltigen Material, wie etwa Papier, Pressspan oder Wellpappe, gefertigt ist.

13. Komplex (100), der aus flachen Folien nach einem der vorhergehenden Ansprüche zusammengesetzt ist, **dadurch gekennzeichnet, dass** wenigstens eine der wenigstens einen dritten ausgestanzten flachen Folie (30) aus einem zellulosehaltigen Material, wie etwa Papier, Pressspan oder Wellpappe, gefertigt ist.

14. Komplex (100), der aus flachen Folien nach einem der vorhergehenden Ansprüche zusammengesetzt ist, **dadurch gekennzeichnet, dass** die wenigstens eine erste Folie (10) in einer um ihre Außenumrisslinie (10.1.1) knickbaren Weise an dem Umfang wenigstens einer zusätzlichen flachen Folie der Anordnung (60) befestigt ist, so dass die Folien dadurch mittels ihrer Biegung entlang der knickbaren Befestigung gestapelt werden.

15. Verfahren zur Gewinnung eines Komplexes (100), der aus aufeinanderfolgend gestapelten flachen Folien nach einem der Ansprüche 1 bis 14 zusammengesetzt ist, wobei der Komplex (100) konfiguriert ist, um in einem einzigen Durchlauf eine Verpackung (1) auszubilden, **dadurch gekennzeichnet, dass** das Verfahren die folgenden Schritte aufweist:
a) Bereitstellen wenigstens einer ersten ausgestanzten flachen Folie (10), die konfiguriert ist, um gefaltet zu werden, die einen ersten Rand (10.1) aufweist, der durch eine Innenumrisslinie (10.1.2) und eine Außenumrisslinie (10.1.1) abgegrenzt wird; und
b) Bereitstellen einer Anordnung (60), die wenigstens eine zusätzliche flache Folie aufweist, die wenigstens eine zweite ausgestanzte flache Folie umfasst, wobei der Durchmesser jeder von ihnen durch den ersten Rand (10.1) der ersten flachen Folie (10) abgegrenzt wird, so dass er innerhalb der Begrenzungen der Innen- und Außenumrisslinien der ersten flachen Folie bleibt;
wobei wenigstens eine der wenigstens einen zusätzlichen flachen Folie der Anordnung (60) eine zweite ausgestanzte flache Folie (20) ist, die konfiguriert ist, um gefaltet zu werden, die einen zweiten Rand (20.1) aufweist, dessen Außenumrisslinie (20.1.1) ihren Umfang abgrenzt, wobei die wenigstens eine zweite Folie (20) ferner aufweist:
• wenigstens eine zweite Hauptklappe (20.2), die konfiguriert ist, um einen Boden (1.2) der Verpackung (1) auszubilden.

16. Verfahren zur Gewinnung eines Komplexes (100), der aus flachen Folien zusammengesetzt ist, nach Anspruch 15, **dadurch gekennzeichnet, dass** das Verfahren ferner die folgenden Schritte aufweist:
c) Bereitstellen von Befestigungseinrichtungen (3);
d) Anordnen der Befestigungseinrichtungen (3) wenigstens auf dem ersten Rand (10.1) der ersten flachen Folie (10) und Positionieren wenigstens einer zusätzlichen Folie auf der ersten flachen Folie (10), indem ihr Umfang zwischen der Innenumrisslinie (10.1.2) und der Außenumrisslinie (10.1.1) der ersten flachen Folie (10) angepasst wird.

17. Verfahren zur Herstellung einer Verpackung (1) zur Aufnahme von Gegenständen (2), vorzugsweise Lebensmittelprodukten, **dadurch gekennzeichnet, dass** es die folgenden Schritte aufweist:
a) Bereitstellen eines Komplexes (100), der aus flachen Folien nach Anspruch 1 zusammengesetzt ist, oder eines Komplexes (100), der nach Anspruch 15 gewonnen wird;
b) Bereitstellen einer Form (4) und eines Kolbens (5), die konfiguriert sind, um flache Folien zu pressen;
c) Positionieren des ersten Rands (10.1) der ersten flachen Folie (10) der Verpackung (1) auf der Form (4);
d) Einführen des Kolbens (5), der auf die Mitte der wenigstens einen zusätzlichen flachen Folie der Anordnung (60) wirkt;
e) Stoppen der Einführung des Kolbens, wenn einmal eine vordefinierte Höhe der Tiefe der Verpackung (1) erreicht wurde.

18. Verfahren zum Verpacken wenigstens eines Gegenstands (2), vorzugsweise von Lebensmittelprodukten, **dadurch gekennzeichnet, dass** es die folgenden Schritte aufweist:
i. Bereitstellen einer Verpackung (1), die nach dem Verfahren von Anspruch 17 gefertigt ist;
ii. Einführen wenigstens eines Gegenstands (2) ins Innere der Verpackung (1),
iii. Positionieren eines Deckels (50) darauf, welcher einen Umfang (50.1) mit einem Wert aufweist, der durch den ersten Rand (10.1) der ersten flachen Folie (10) abgegrenzt wird; und
iv. Befestigen entlang des ersten Rands (10.1) der ersten flachen Folie (10), indem die Befestigung der wenigstens einen zusätzlichen flachen Folie (60) an dem Deckel (50) bewirkt wird, wobei das Innere der Verpackung (1) dadurch leckdicht ist.

19. Verfahren nach dem vorhergehenden Anspruch, **dadurch gekennzeichnet, dass** nach dem Schritt ii) eine bestimmte Atmosphäre oder ein Vakuum angewendet wird, was das Verpacken in einer modifizierten Atmosphäre oder einem Vakuum im Inneren der Verpackung erreicht und dessen Lecken oder Verlust verhindert, indem es nach Schritt iv) leckdicht gemacht wird.

## Revendications

1. Un complexe (100) constitué de feuilles plates empilées consécutivement, **caractérisé en ce qu'**il est configuré pour former un emballage (1) en une seule passe, de préférence destiné à contenir des produits alimentaires, ledit complexe comprenant :
• au moins une première feuille plate (10) découpée à l'emporte-pièce configurée pour être pliée, comprenant un premier rebord continu (10.1) délimité par un contour extérieur (10.1.1) et un contour intérieur (10.1.2), ledit contour intérieur (10.1.2) comprenant une première partie (10.1.2.1) et le contour extérieur (10.1.1) comprenant une deuxième partie (10.1.1.1), lesdites première (10.1.2.1) et deuxième (10.1.1.1) parties étant en correspondance l'une avec l'autre ;
∘ ladite au moins une première feuille plate (10) découpée à l'emporte-pièce comprend en outre au moins un premier volet principal (10.2) s'étendant le long de la première partie (10.1.2.1) du contour intérieur (10.1.2) dans la direction opposée à la deuxième partie (10.1.1.1) du contour extérieur (10.1.1), le premier volet principal (10.2) étant configuré pour former une paroi (1.3) de l'emballage (1) ; et
• un ensemble (60) comprenant au moins une feuille plate supplémentaire, au moins une parmi ladite au moins une feuille plate supplémentaire de l'ensemble (60) étant une deuxième feuille plate découpée à l'emporte-pièce configurée pour être pliée, comprenant un deuxième rebord dont le contour extérieur délimite son périmètre, ladite au moins une deuxième feuille comprenant en outre :
- au moins un deuxième volet principal configuré pour former une base de l'emballage,
ledit complexe étant **caractérisé en ce que** : le périmètre de l'une quelconque parmi ladite au moins une feuille plate supplémentaire est délimité par le premier rebord (10.1) de la première feuille plate (10) de sorte qu'il est maintenu dans les limites des contours intérieur et extérieur de la première feuille plate.

2. Le complexe (100) constitué de feuilles plates selon la revendication 1, **caractérisé en ce que** ladite au moins une première feuille plate (10) découpée à l'emporte-pièce comprend en outre au moins un premier volet auxiliaire (10.3) relié au premier volet principal (10.2) et configuré pour faire partie de la base (1.2) de l'emballage (1).

3. Le complexe (100) constitué de feuilles plates selon l'une quelconque des revendications 1 ou 2, **caractérisé en ce que** ladite au moins une deuxième feuille plate (20) découpée à l'emporte-pièce comprend en outre au moins un deuxième volet auxiliaire (20.3) situé entre le deuxième volet principal (20.2) et le deuxième rebord (20.1).

4. Le complexe (100) constitué de feuilles plates selon la revendication précédente, **caractérisé en ce qu'**au moins un deuxième volet auxiliaire (20.3) de ladite au moins une deuxième feuille (20) comporte une liaison frangible avec le contour intérieur (20.1.2) du deuxième rebord (20.1).

5. Le complexe (100) constitué de feuilles plates selon l'une quelconque des revendications précédentes, **caractérisé en ce qu'**au moins une parmi ladite au moins une feuille plate supplémentaire de l'ensemble (60) est une feuille plate (40) faite en matière thermoplastique configuré pour former la doublure de l'emballage (1).

6. Le complexe (100) constitué de feuilles plates selon l'une quelconque des revendications précédentes, **caractérisé en ce qu'**au moins une parmi ladite au moins une feuille plate supplémentaire de l'ensemble (60) est une troisième feuille plate (30) découpée à l'emporte-pièce configurée pour être pliée, comprenant un troisième rebord (30.1) avec des coins sur son contour intérieur (30.1.2), son contour extérieur (30.1.1) délimitant son périmètre, ladite au moins une troisième feuille (30) comprenant en outre :
• au moins un troisième volet principal (30.2) sensiblement diagonal à l'un des coins du contour intérieur (30.1.2) et relié au troisième rebord (30.1) par une première partie (30.1.2.1) dudit troisième rebord (30.1), ledit volet principal (30.2) étant configuré pour former au moins un coin chanfreiné (1.4) de l'emballage (1).

7. Le complexe (100) constitué de feuilles plates selon la revendication précédente, **caractérisé en ce qu'**au moins un troisième volet principal (30.2) comprend en outre au moins un troisième volet auxiliaire (30.3) situé à une deuxième extrémité (30.2.2) dudit au moins un troisième volet principal (30.2), le troisième volet auxiliaire (30.3) étant configuré pour être en appui sur ledit au moins un premier volet auxiliaire (10.3) et/ou volet principal (10.2) et/ou sur ledit au moins un deuxième volet auxiliaire (20.3) et/ou volet principal (20.2).

8. Le complexe (100) constitué de feuilles plates selon l'une quelconque des revendications 1 à 7, **caractérisé en ce qu'**au moins une feuille plate supplémentaire de l'ensemble (60) est une feuille plate (50) configurée pour former un couvercle tel qu'un article (2) contenu dans l'emballage (1) soit recouvert une fois que l'emballage (1) a été formé, ladite feuille plate (50) étant de préférence réalisée en un matériau thermoplastique.

9. Le complexe (100) constitué de feuilles plates selon l'une quelconque des revendications précédentes, **caractérisé en ce que** le complexe (60) comprend en outre des moyens de fixation (3) situés sur ladite au moins une première feuille plate (10) et/ou sur au moins une feuille plate de l'ensemble (60) .

10. Le complexe (100) constitué de feuilles plates selon la revendication précédente, **caractérisé en ce que** les moyens de fixation (3) sont de la colle chaude, de préférence une colle thermoplastique.

11. Le complexe (100) constitué de feuilles plates selon la revendication précédente et la revendication 5, **caractérisé en ce que** les moyens de fixation (3) sont situés sur la première feuille plate (10) ou sur au moins une feuille plate (40) faite en matière thermoplastique et sont un adhésif fort, l'adhésif étant placé uniquement sur le premier rebord (10.1) ou de façon adjacent au périmètre (40.1) de la feuille plate (40) faite en matériau thermoplastique, respectivement.

12. Le complexe (100) constitué de feuilles plates selon l'une quelconque des revendications précédentes, **caractérisé en ce qu'**au moins une parmi ladite au moins une première feuille plate (10) découpée à l'emporte-pièce et/ou ladite au moins une deuxième feuille plate (20) découpée à l'emporte-pièce est fabriquée à partir d'un matériau cellulosique, tel que du papier, du carton comprimé ou du carton ondulé.

13. Le complexe (100) constitué de feuilles plates selon l'une quelconque des revendications précédentes, **caractérisé en ce qu'**au moins une parmi ladite au moins une troisième feuille plate (30) découpée à l'emporte-pièce est fabriquée à partir d'un matériau cellulosique, tel que du papier, carton comprimé ou carton ondulé.

14. Le complexe (100) constitué de feuilles plates selon l'une quelconque des revendications précédentes, **caractérisé en ce que** ladite au moins une première feuille (10) est liée de manière articulable par son contour extérieur (10.1.1) au périmètre d'au moins une feuille plate supplémentaire de l'ensemble (60), de sorte que les feuilles sont ainsi empilées au moyen de leur pliage le long de ladite liaison articulable.

15. Un procédé d'obtention d'un complexe (100) constitué de feuilles plates empilées consécutivement selon l'une quelconque des revendications 1 à 14, ledit complexe (100) étant configuré pour former un emballage (1) en une seule passe, **caractérisé en ce que** le procédé comprend les étapes suivantes :
a) fournir au moins une première feuille plate (10) découpée à l'emporte-pièce configurée pour être pliée, comprenant un premier rebord (10.1) délimité par un contour intérieur (10.1.2) et un contour extérieur (10.1.1) ; et
b) fournir un ensemble (60) comprenant au moins une feuille plate supplémentaire, incluant au moins une deuxième feuille plate découpée à l'emporte-pièce, le périmètre de chacune d'elles étant délimité par le premier rebord (10.1) de la première feuille plate (10) de telle sorte qu'elle est maintenue dans les limites des contours intérieur et extérieur de la première feuille plate ;
au moins une parmi ladite au moins une feuille plate supplémentaire de l'ensemble (60) est une deuxième feuille plate (20) découpée à l'emporte-pièce configurée pour être pliée, comprenant un deuxième rebord (20.1) dont le contour extérieur (20.1.1) délimite son périmètre, ladite au moins une deuxième feuille (20) comprenant en outre :
• au moins un deuxième volet principal (20.2) configuré pour former une base (1.2) de l'emballage (1) .

16. Le procédé d'obtention d'un complexe (100) constitué de feuilles plates selon la revendication 15, **caractérisé en ce que** le procédé comprend en outre les étapes suivantes :
c) prévoir des moyens de fixation (3) ;
d) placer les moyens de fixation (3) sur au moins le premier rebord (10.1) de la première feuille plate (10) et positionner au moins une feuille supplémentaire sur la première feuille plate (10) en faisant coïncider son périmètre entre le contour intérieur (10.1.2) et le contour extérieur (10.1.1) de la première feuille plate (10).

17. Un procédé de fabrication d'un emballage (1) destiné à contenir des articles (2), de préférence des produits alimentaires, **caractérisé en ce qu'**il comprend les étapes suivantes :
a) fournir un complexe (100) constitué de feuilles plates selon la revendication 1 ou un complexe (100) obtenu selon la revendication 15 ;
b) prévoir un moule (4) et un piston (5) configurés pour presser des feuilles plates ;
c) positionner le premier rebord (10.1) de la première feuille plate (10) de l'emballage (1) sur le moule (4) ;
d) introduire le piston (5) agissant sur le centre d'au moins une feuille plate supplémentaire de l'ensemble (60) ;
e) arrêter l'introduction du piston une fois qu'une hauteur prédéfinie de la profondeur dudit emballage (1) a été atteinte.

18. Un procédé d'emballage d'au moins un article (2), de préférence des produits alimentaires, **caractérisé en ce qu'**il comprend les étapes suivantes :
i. fournir un emballage (1) fabriqué selon le procédé de la revendication 17 ;
ii. introduire au moins un article (2) à l'intérieur de l'emballage (1) ;
iii. positionner un couvercle (50) sur celui-ci, qui comprend un périmètre (50.1) avec une valeur délimitée par le premier rebord (10.1) de la première feuille plate (10) ; et
iv. fixer le long du premier rebord (10.1) de la première feuille plate (10) en provoquant la fixation d'au moins une feuille plate supplémentaire de l'ensemble (60) avec le couvercle (50), l'intérieur dudit emballage (1) étant ainsi étanche.

19. Le procédé selon la revendication précédente, **caractérisé en ce qu'**une atmosphère déterminée ou un vide est appliqué après l'étape ii), ce qui réalise un emballage sous atmosphère modifiée, ou un vide à l'intérieur de l'emballage, et empêche la fuite ou la perte de celle-ci ou celui-ci par le fait de le rendre étanche après l'étape iv).
